(19) Europäisches Patentamt
European Patent Office
Office européen des brevets

(11) Veröffentlichungsnummer: **0 113 924**
**B1**

(12) # EUROPÄISCHE PATENTSCHRIFT

(45) Veröffentlichungstag der Patentschrift: **28.10.87**

(51) Int. Cl.⁴: **C 08 F 285/00**, C 08 L 33/12

(21) Anmeldenummer: **83113259.2**

(22) Anmeldetag: **31.12.83**

(54) **Schlagzähmodifizierungsmittel.**

(30) Priorität: **10.01.83 DE 3300526**

(43) Veröffentlichungstag der Anmeldung: **25.07.84 Patentblatt 84/30**

(45) Bekanntmachung des Hinweises auf die Patenterteilung: **28.10.87 Patentblatt 87/44**

(84) Benannte Vertragsstaaten: **BE DE FR GB IT NL SE**

(56) Entgegenhaltungen:
**EP - A - 0 050 848**
**FR - A - 2 184 868**
**FR - A - 2 483 936**
**US - A - 3 971 835**
**US - A - 4 145 380**

**Die Akte enthält technische Angaben, die nach dem Eingang der Anmeldung eingereicht wurden und die nicht in dieser Patentschrift enthalten sind.**

(73) Patentinhaber: **Röhm GmbH, Kirschenallee Postfach 4242, D-6100 Darmstadt 1 (DE)**

(72) Erfinder: **Sütterlin, Norbert, Dr., Am Horeth 23, D-6105 Ober-Ramstadt (DE)**
Erfinder: **Arndt, Peter Joseph, Dr., Im Säbchen 9, D-6104 Seeheim-Jugenheim (DE)**
Erfinder: **Heil, Ernst, Sudetenstrasse 4, D-6081 Stockstadt/Rh. (DE)**
Erfinder: **Siol, Werner, Dr., Goerdelerweg 34, D-6100 Darmstadt (DE)**
Erfinder: **Tilch, Willi, Wilhelmstrasse 63, D-6107 Reinheim 1 (DE)**
Erfinder: **Wopker, Wilhelm, Raiffeisenstrasse 5, D-6101 Bickenbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 113 924 B1

## Beschreibung

Gebiet der Erfindung

Die Erfindung betrifft mehrstufige Emulsionspolymerisate, die vorwiegend zur Abmischung mit harten und verhältnismässig spröden Kunststoffen vorgesehen sind, um deren Zähigkeitseigenschaften zu verbessern. Sie werden häufig als Schlagzähmodifizierungsmittel bezeichnet, obwohl sie auch allein als Formmasse zur Herstellung von schlagzähen Formkörpern, Folien und dergl. verarbeitet werden können.

Ihr grundsätzlicher Aufbau aus einem harten, nicht-elastomeren Kern, einer elastomeren Zwischenstufe und einer harten, nicht elastomeren Endstufe ist im Oberbegriff des Patentanspruchs angegeben. Es wird angenommen, dass die Polymerisate der Zwischenstufe und der Endstufe schalenförmig um den Kern angeordnet sind.

Stand der Technik

Durch Emulsionspolymerisation hergestellte Schlagzähmodifizierungsmittel aus einem elastomeren Kern und einer harten, nicht-elastomeren Schale sind in grosser Zahl aus dem Stand der Technik bekannt.

Gemäss US-P 3 661 994 wurde eine Verbesserung dieser Emulsionspolymerisate dadurch erzielt, dass man als erste Stufe des Emulsionspolymerisats einen harten Kern erzeugt und durch zwei nachfolgende Polymerisationsstufen eine elastomere und eine harte Schale erzeugte. Die elastomere Schale ist mit Divinylmonomeren, wie Divinylbenzol oder Butylendimethacrylat, vernetzt.

Eine weitere Verbesserung der Emulsionspolymerisate wurde gemäss US-P 3 793 402 durch die Verwendung von zwei verschiedenen Vernetzungsmitteln in der elastomeren Phase erreicht. Der eine Vernetzertyp wird als «Polymerisationsvernetzer» bezeichnet und enthält zwei oder mehr polymerisationsfähige Doppelbindungen, die die gleiche Polymerisationsgeschwindigkeit haben wie das einfach ungesättigte Hauptmonomer, das den überwiegenden Teil der elastomeren Phase bildet. Er bewirkt ein innere Vernetzung der elastomeren Phase und ist vollständig verbraucht, wenn die Polymerisation der elastomeren Stufe abgeschlossen ist. Als Beispiele werden Diacrylester und Dimethacrylester von Diolen und Divinyl- und Trivinylbenzol genannt.

Der zweite Vernetzertyp, der gleichzeitig angewendet werden muss, wird als «Pfropfvernetzer» bezeichnet. Er enthält eine polymerisierbare Doppelbindung, deren Polymerisationsgeschwindigkeit mit der des Hauptmonomers übereinstimmt, und eine weitere polymerisierbare Doppelbindung, deren Polymerisationsgeschwindigkeit deutlich geringer ist. Die zuletzt genannten Doppelbindungen bleiben wenigstens teilweise unverändert erhalten, wenn das Hauptmonomer vollständig polymerisiert ist und werden bei der Fortsetzung der Polymerisation in der dritten Stufe allmählich verbraucht. Sie bewirken daher eine Vernetzung der elastomeren zweiten Stufe mit der harten dritten Stufe.

Diese doppelte Vernetzung hat sich als wesentlich erwiesen, um den sogenannten «Weissbruch» zu vermeiden. Darunter wird eine bleibende lokale Weissfärbung eines sonst klar durchsichtigen Formkörpers an Stellen verstanden, an denen er einer starken Dehnung oder Schlageinwirkung ausgesetzt war. Der Weissbruch wird durch die Entstehung von Rissen und Ablösungen zwischen der kontinuierlichen Hartphase des Formkörpers und der darin in feiner Verteilung eingelagerten Elastomerphase gedeutet. Mit dieser Deutung steht im Einklang, dass durch die Vernetzung der elastomeren mit der harten Phase Ablösungen beider Phasen und damit auch der störende Weissbruch unter Zugbeanspruchung vermieden wird. Wird jedoch der Anteil des Pfropfvernetzers bis zum völligen Verschwinden des Weissbruchs erhöht, so ist eine Verminderung der Zähigkeit, insbesondere der Schlagzähigkeit, festzustellen.

Aufgabe und Lösung

Ziel der Erfindung war es, bei dreistufig aufgebauten Emulsionspolymerisaten bzw. den daraus durch Abmischung mit anderen Kunststoffen herstellbaren Formmassen den Weissbruch weitgehend oder vollständig zu vermeiden, ohne dass die Schlagzähigkeit vermindert wird.

Es wurde gefunden, dass die Aufgabe bei den dreistufig hergestellten Emulsionspolymerisaten gemäss dem Oberbegriff des Patentanspruches dadurch gelöst wird, dass am Aufbau der elastomeren Zwischenstufe als mehrfunktionelle Monomere wenigstens 0,2 Gew.%, bezogen auf die Monomeren, die der elastomeren Phase zugrunde liegen, an Monomeren mit drei oder mehr Acryl- und/oder Methacrylgruppen beteiligt sind. Diese Monomeren sind nach der aus dem Stand der Technik bekannten Einteilung der Gruppe der Polymerisationsvernetzer zuzurechnen, da sie die gleichen ungesättigten polymerisationsfähigen Gruppen wie die Hauptmonomeren der elastomeren Phase, nämlich Acryl- oder Methacrylgruppen der Struktur

$$CH_2=CH-CO- \text{ bzw. } CH_2=C(CH_3)-CO-$$

enthalten. Dagegen werden Pfropfvernetzer erfindungsgemäss nicht verwendet, so dass die durch diese hervorgerufene Verminderung der Zähigkeit nicht eintritt. Überraschenderweise ergeben die erfindungsgemässen Emulsionspolymerisate trotz der Abwesenheit von Pfropfvernetzern keinen Weissbruch bei Schlag- und Zugbelastungen.

Es ist zwar auch aus EP-A 46 340 bekannt, in einem Schlagzähmodifizierungsmittel, bestehend aus einem dreistufigen Emulsionspolymerisat der beschriebenen Art, das keine Pfropfvernetzer in der elastomeren Phase zu enthalten braucht, als Vernetzungsmittel «Verbindungen

mit mindestens zwei nichtkonjugierten C=C-Bindungen» einzubauen, worin ein Hinweis auf Vernetzungsmittel mit drei oder mehr ungesättigten Resten gesehen werden kann. Dabei handelt es sich jedoch um Verbindungen wie Triallylcyanurat oder Triallylisocyanurat, die nicht drei oder mehr Acryl- oder Methacrylgruppen enthalten. Jedoch zeigen nur die letzteren die erfindungsgemässe Wirkung, nicht dagegen Triallylcyanurat.

Die mehrfunktionellen Vernetzungsmittel, die erfindungsgemäss am Aufbau der elastomeren Phase beteiligt sind, enthalten an einen mehrfunktionellen organischen Rest gebunden wenigstens drei, in der Regel nicht mehr als vier Acryl- oder Methacrylreste. Vernetzer mit bis zu sechs oder gegebenenfalls noch mehr solchen Gruppen können verwendet werden. Vorzugsweise sind die Acryl- oder Methacrylreste esterartig über Sauerstoffatome des organischen Restes gebunden. Auch amidartige Bindungen über Stickstoffatome sind möglich. Vorzugsweise leiten sich alle ungesättigten Reste des Vernetzungsmittelmoleküls entweder allein von der Acrylsäure oder allein von der Methacrylsäure ab und sind alle esterartig oder alle amidartig gebunden. Der mehrfunktionelle organische Rest ist vorzugsweise aliphatischer Natur und enthält 2 bis 12 C-Atome. Er kann sich z.B. vom Glycerin, Trimethylolpropan, Pentaerythrit, Inosit und ähnlichen Zuckeralkoholen, Äthylendiamin und anderen aliphatischen Di- oder Polyaminen mit bis zu 12 C-Atomen ableiten. Auch Triacrylamid oder -methacrylamid sind als Vernetzer verwendbar.

Ein Gehalt des drei- oder mehrfunktionellen Vernetzungsmittels unter 0,2 Gew.% lässt den angestrebten Effekt nicht mehr erreichen. Bei Anteilen über 3 Gew.% nimmt die Schlagzähigkeit wieder ab. Der bevorzugte Bereich liegt bei 0,5 bis 3 Gew.%, insbesondere 0,8 bis 2,6 Gew.%, jeweils bezogen auf das Gewicht der am Aufbau der Elastomerenphase beteiligten Monomeren.

Es ist möglich, aber nicht erforderlich, neben dem drei- oder mehrfunktionellen Vernetzungsmittel weitere Vernetzer mit zwei Acryl- oder Methacrylgruppen, beispielsweise Äthylenglykoldiacrylat oder -dimethacrylat oder Methylen-bis-acrylamid oder -bis-methacrylamid, mitzuverwenden.

Der Aufbau des mehrstufigen Emulsionspolymerisats entspricht im übrigen weitgehend dem erwähnten Stand der Technik.

Der Anteil des harten, nicht-elastomeren Kerns, kann z.B. zwischen 6 und 40 Gew.%, insbesondere zwischen 20 und 30 Gew.% des Gesamtgewichts des mehrstufigen Emulsionspolymerisats liegen. Sein Durchmesser beträgt in der Regel 100 bis 500, vorzugsweise etwa 200 nm. Er wird in bekannter Weise in einem wässrigen Medium durch Emulsionspolymerisation eines Monomermaterials erzeugt, das zu wenigstens 80 Gew.% aus Methylmethacrylat besteht. Als Comonomere, die bis zu 20 Gew.% des Monomermaterials bilden können, seien z.B. andere Methacrylsäurealkylester, Alkylester der Acrylsäure, Acrylnitril, Vinyltoluol, Vinylacetat und Vinylhalogenide genannt. Weiterhin können vernetzende Comonomere mit wenigstens zwei polymerisationsfähigen Doppelbindungen in dem Monomermaterial in einer Menge bis zu 5 Gew.% enthalten sein. Geringe Mengen an sauren Comonomeren, wie Acryl- oder Methacrylsäure oder Sulfonsäure- oder Phosphonsäuregruppen enthaltenden Estern oder Amiden der Acryl- oder Methacrylsäure, können zur Verbesserung der Stabilität der Dispersion mitverwendet werden.

Die Glastemperatur (nach DIN 7742) des Kernmaterials liegt über 50°C, vorzugsweise bei 80 bis 150°C.

Die elastomere Phase bzw. Zwischenstufe hat eine Glastemperatur unter 0°C und wird durch Emulsionspolymerisation im wässrigen Medium in Gegenwart des Kernlatex erzeugt. Die elastomere Phase bildet einen Anteil von 20 bis 70 Gew.% des mehrstufigen Emulsionspolymerisats. Wenn die Zwischenstufe allmählich oder in mehreren Stufen in die Endstufe übergeht, so werden zu der Zwischenstufe alle im Laufe der Emulsionspolymerisation gebildeten Plymerisatanteile gerechnet, deren Glastemperatur unter 0°C liegt. Die Glastemperatur dieser Anteile lässt sich häufig nicht für sich allein messen, kann aber dadurch ermittelt werden, dass man ein Emulsionspolymerisat der betreffenden Monomerenzusammensetzung für sich ohne Kernlatex herstellt und isoliert und die Glastemperatur (nach DIN 7742) bestimmt.

Die elastomere Zwischenstufe ist zu wenigstens 90, vorzugsweise zu wenigstens 96 Gew.% aus monofunktionellen äthylenisch ungesättigten Monomeren aufgebaut. Darunter werden alle radikalisch polymerisierbaren bzw. copolymerisierbaren Monomeren mit nur einer polymerisationsfähigen Gruppe, wie einer Vinyl-, Vinyliden- oder Äthylidengruppe, verstanden. Wenigstens die Hälfte, vorzugsweise 60 bis 90% dieser Monomeren, bestehen aus Alkylestern der Acrylsäure mit 1 bis 18, insbesondere 2 bis 10 C-Atomen oder Alkylestern der Methacrylsäure mit 4 bis 18, insbesondere 4 bis 12 C-Atomen im Alkylrest.

Als Comonomere kommen z.B. Styrol, α-Methylstyrol, Vinyltoluol, Vinylcarbazol, Vinylacetat, Vinylpropionat und Vinylester weiterer Fettsäuren mit 4 bis 20 C-Atomen, Acryl- oder Methacrylnitril, Alkylester der Malein-, Fumar- oder Itakonsäure, Olefine usw. in Betracht. Stark polare Monomere, wie Acryl- oder Methacrylsäure oder deren Amide oder Hydroxyalkylester oder Aminoalkylester, werden in der Regel nicht oder allenfalls nur in geringen Mengen mitverwendet. Der Anteil der Comonomeren ist insgesamt so zu begrenzen, dass eine Glastemperatur von 0°C in der Zwischenstufe nicht überschritten wird.

Eine besondere Bedeutung als Comonomere haben vinylaromatische Monomere, insbesondere Styrol, da sie den optischen Berechnungsindex der elastomeren Phase erhöhen und demjenigen der anderen Polymerisatphasen und dem gegebenenfalls als Abmischkomponente dienenden thermoplastischen Polymerisat anzupassen gestatten. Je nach deren Brechungsindex werden in

die elastomere Zwischenstufe beispielsweise 10 bis 40 Gew% Vinylaromaten, insbesondere Styrol, eingebaut. Styrolgehalte von 13–17 Gew.%, jeweils bezogen auf das Gewicht der elastomeren Zwischenstufe, sind besonders bevorzugt.

Die harte, nicht-elastomere Endstufe wird, wie die vorangehenden Stufen, durch Emulsionspolymerisation in wässrigem Medium in Anwesenheit der vorausgehenden Stufe polymerisiert. Es wird angenommen, dass sich die Zwischen- und Endphasen in der Reihenfolge der Polymerisationsstufen schalenförmig um den Kern legen, so dass die Endstufe die äusserste Hülle der Emulsionspolymerisatpartikel bilden. Der Gewichtsanteil der Endstufe am Gesamtgewicht des mehrstufigen Emulsionspolymerisats beträgt in der Regel 15 bis 60 Gew.%, vorzugsweise 20 bis 40 Gew.%.

Methylmethacrylat bildet wenigstens 80 Gew.%, vorzugsweise wenigstens 90 Gew% des Monomermaterials der Endstufe. Es ist besonders bevorzugt, allein Methylmethacrylat einzusetzen. Als Comonomere kommen diejenigen monofunktionellen Monomeren in Betracht, die schon als möglicher Bestandteil der Zwischenstufe erwähnt worden sind. Sie sind nach Art und Menge so auszuwählen, dass die Glastemperatur (nach DIN 7742) nicht unter 50°C liegt.

Wenn das Emulsionspolymerisat in Abmischung mit einer thermoplastischen Formmasse, insbesondere Polymethylmethacrylat eingesetzt werden soll, ist es vorteilhaft, das Molekulargewicht des Endstufenpolymerisats – soweit es nicht durch Pfropfung mit der Zähphase vernetzt ist – demjenigen der Formmasse anzupassen. Zu diesem Zweck kann bei der Polymerisation der Endstufe ein Regler mitverwendet werden, beispielsweise 0,05 bis 2 Gew.% (bez. a.d. Gew. d. Endstufe) eines einwertigen aliphatischen Mercaptans, wie Dodecylmercaptan.

Herstellungsverfahren

Es ist wesentlich, den Kern, die Zwischenstufe und die Endstufe in dieser Reihenfolge durch aufeinanderfolgende Stufen eines Emulsionspolymerisationsverfahrens in einem wässrigen Medium herzustellen. Dabei verbleiben die Latexteilchen bis zum Abschluss der Endstufe im emulgierten Zustand. Die genannten Stufen können gegebenenfalls in Teilstufen unterteilt werden, in denen etwas unterschiedliche Bedingungen herrschen können, z.B. unterschiedliche Zusammensetzungen des Monomermaterials.

Auch können weitere Zwischenstufen einbezogen werden, die sich keiner der genannten Stufen eindeutig zuordnen lassen. Beispielsweise kann zwischen der elastomeren Zwischenstufe und der Endstufe als weitere Zwischenstufe ein Emulsionspolymerisat mit einer Glastemperatur zwischen 0 und 50°C erzeugt werden. Es ist vorteilhaft, in diesem Falle auch in dieser zusätzlichen Polymerisationsstufe ebenso wie in der elastomeren Zwischenstufe wenigstens 0,2 Gew.% an vernetzenden Monomeren mit drei oder mehr Acryl- und/oder Methacrylgruppen mitzuverwenden. Das gilt auch für den Fall, dass die Zusammensetzung der Zwischenstufe kontinuierlich in der Weise verändert wird, dass die Glastemperatur des jeweils gebildeten Polymerisats allmählich von unter 0° bis auf 50°C ansteigt.

Die Emulsionspolymerisation wird in bekannter Weise nach dem Saatlatexverfahren durchgeführt. Das wässrige Medium enthält einen vorzugsweise anionogenen Emulgator und einen wasserlöslichen oder wasserunlöslichen Initiator. Das Monomermaterial zur Bildung des Kernlatex (Saatlatex) kann vor Einstellung der Polymerisationsbedingungen in dem wässrigen Medium emulgiert oder unter den Polymerisationsbedingungen kontinuierlich oder in Anteilen zugesetzt werden. Ebenso kann ein Teil des Monomermaterials vor und der verbleibende Teil nach Einstellung der Polymerisationsbedingungen zugesetzt werden. Die Teilchengrösse des Kernlatex wird im wesentlichen in der Anfangsphase der Polymerisation festgelegt.

Bei Verwendung von Ammonium- oder Alkaliperoxodisulfaten als Initiator liegt die Polymerisationstemperatur im Bereich von 50 bis 100°C, bei Verwendung von Redoxinitiatorsystemen gegebenenfalls auch darunter.

Die Monomermaterialien der elastomeren Zwischenstufe und der Endstufe sowie gegebenenfalls weiterer Zwischenstufen, können absatzweise oder allmählich zugesetzt werden, wenn die Polymerisation der vorausgehenden Stufe weitgehend oder vollständig abgeschlossen ist. Während dieser Verfahrensstufen kann weiterer Initiator und/oder Emulgator zudosiert werden, jedoch wird die Gesamtmenge an Emulgiermitteln möglichst gering gehalten, da sie im Endprodukt nachteilig wirken können. Im allgemeinen werden etwa 0,01 bis 5 Gew.% an Emulgiermitteln, bezogen auf das Gesamtgewicht des Polymerisats, eingesetzt.

Aus dem erhaltenen Latex wird das Emulsionspolymerisat nach bekannten Methoden isoliert, z.B. durch Sprühtrocknen, Gefriertrocknen oder durch Koagulation, Filtration und Trocknung. Dabei fällt das Polymerisat in rieselfähiger, trockener Form an, sofern bei der Isolierung Bedingungen vermieden werden, unter denen das Polymerisat zu stark zusammen=sintert. Ein anderes Verfahren zur Abtrennung des Polymeren aus einem Latex ist aus DE-OS 2 917 321 bekannt. Es beruht auf der Koagulation und Entwässerung des Latex in einem Schneckenextruder, wobei ein geschmolzener Strang des Polymerisats ausgetragen wird.

Anwendung

Die neuen mehrstufigen Emulsionspolymerisate sind thermoplastisch bei 150 bis 300°C, vorzugsweise zwischen 200°C und 280°C, durch Extrusion, Kalandrieren, Spritzgiessen usw. zu schlagzähen harten Formkörpern oder Folien verarbeitbar.

Sie werden jedoch vorzugsweise im Gemisch mit anderen, damit homogen mischbaren thermoplastischen Polymerisaten zu Formmassen

verarbeitet, wodurch die Schlagzähigkeit der genannten Polymerisate wesentlich erhöht wird. Diese Formmassen lassen sich ebenfalls durch die genannten Verfahren verarbeiten.

In diesem Sinne können die erfindungsgemässen Schlagzähmodifizierungsmittel beispielsweise mit weichmacherfreiem bzw. -armem Polyvinylchlorid vermischt werden, da sich dieses Polymere mit dem Material der Endstufe des erfindungsgemässen Polymerisats vollständig verträgt und homogen mischen lässt. Das Schlagzähmodifizierungsmittel wird in diesem Falle im allgemeinen in einem Anteil von 10 bis 80 Gew.% der Formmasse eingesetzt.

Das bevorzugte Anwendungsgebiet der neuen Schlagzähmodifizierungsmittel besteht in der Abmischung mit Formmassen auf Basis von Methylmethacrylat. Es kann sich um reines Polymethylmethacrylat oder um Mischpolymerisate von 50 bis 99% Methylmethacrylat und 1 bis 50 Gew.% monofunktionellen äthylenisch ungesättigten Comonomeren handeln, z.B. Alkylester der Acrylsäure mit 1 bis 8 C-Atomen im Alkylrest oder der Methacrylsäure mit 2 bis 10 C-Atomen im Alkylrest. In diesen Formmassen beträgt der Anteil des Schlagzähmodifizierungsmittels etwa 10 bis 80 Gew.%. Sie zeichnen sich durch gute Zähigkeitseigenschaften aus. Die Kerbschlagzähigkeit nach DIN 53 448 liegt z.B. im Bereich von 4–7 N/mm². Bei einer Schlagbeanspruchung bis zu 3,375 Joule (30 in·lb) tritt kein Weissbruch auf.

Die Herstellung erfindungsgemässer Emulsionspolymerisate wird in den Beispielen 1 bis 13 beschrieben. Zum Vergleich wurden in den Beispielen 14–18 Emulsionspolymerisate abweichend von der Lehre der vorliegenden Erfindung hergestellt. Die anwendungstechnische Prüfung der Emulsionspolymerisate zeigt, dass das erfindungsgemässe Vernetzungsprinzip kritisch ist, um Emulsionspolymerisate mit dem gewünschten Eigenschaftsbild herzustellen. (Teile (T.) sind jeweils Gewichtsteile, Prozente bedeuten Gew.%).

Beispiele

A. Herstellung von Saatlatices als Kernmaterial

Beispiel 1

450 Teile Methylmethacrylat werden in üblicher Weise in einem Rührgefäss nach dem Emulsionszulaufverfahren mit einer Wasserphase von 1150 Teilen Wasser polymerisiert. Als Initiator wurden 3 Teile Kaliumperoxodisulfat und als Emulgator 0,9 Teile Natriumlaurylsulfat verwendet. (Ansatz 1a). Bei einem anderen Ansatz (1b) wurde als Redox-Initiator 1,6 T. Kaliumperoxodisulfat, 2,4 T. Natriumdithionit und 0,001 T. Eisen-II-sulfat verwendet und die Polymerisation durch Emulgieren und Erwärmen des gesamten Ansatzes durchgeführt. in weiteren Ansätzen entsprechend 1a und 1b wurde Natriumlaurylsulfat jeweils durch 0,9 bzw. 2 Teile $C_{15}$-Paraffinsulfonat oder durch 1,5 bzw. 5 Teile eines fünffach oxäthylierten und phosphatierten Isononylphenols (Na-Salz) ersetzt.

In allen Fällen entstanden Saatlatices mit einem Feststoffgehalt von 28%.

Beispiel 2

Nach dem Verfahren von Beispiel 1a wurden anstelle von reinem Methylmethacrylat dessen Gemisch mit je 0,5% Allylmethacrylat, Trimethylolpropantriacrylat oder 1,4-Butandiol-dimethacrylat eingesetzt.

Beispiel 3

Nach dem Verfahren von Beispiel 1a wurden polymerisiert:

3a) 99 T. Methylmethacrylat, 0,9 T. 1,4-Butandioldiacrylat, 0,1 T. Methacrylsäure

3b) 84 T. Methylmethacrylat, 12 T. Styrol, 3,9 T. Isobutylmethacrylat, 0,1 T. Methacrylsäure

Die Emulsionspolymerisate gemäss Beispielen 1–3 hatten Glastemperaturen zwischen 100 und 130°C.

B. Herstellung von Emulsionspolymerisaten gemäss der Erfindung

Beispiel 4

In einer Rührapparatur wurden 250 Teile des Saatlatex von Beispiel 2 vorgelegt und als elastomere Zwischenstufe ein Gemisch aus

| | |
|---|---|
| 91,4 | Teilen Butylacrylat |
| 17,9 | Teilen Styrol |
| 6,8 | Teilen Methylmethacrylat |
| 1,2 | Teilen Trimethylolpropantriacrylat |
| 82 | Teilen Wasser |
| 0,09 | Teilen Na-Laurylsulfat |
| 0,048 | Teilen Kaliumperoxodisulfat |

thermisch aufpolymerisiert. Daran anschliessend wurde als nicht-elastische Endstufe ein Gemisch aus

| | |
|---|---|
| 80 | Teilen Methylmethacrylat |
| 26,5 | Teilen Wasser |
| 0,06 | Teilen Natriumlaurylsulfat |
| 0,045 | Teilen Kaliumperoxodisulfat |
| 0,15 | Teilen 2-Äthylhexylthioglycolat |

thermisch aufgepfropft.

Es wurde ein Latex mit etwa 44% Feststoffgehalt erhalten, aus dem das Emulsionspolymerisat durch Sprühtrocknen gewonnen wurde.

In einem weiteren Ansatz wurde anstelle des Peroxodisulfats als Initiator für die Zwischenstufe ein Redoxsystem aus 0,09 T. 1,4-Diisopropylbenzol-monohydroperoxid, 0,06 T. Natriumhydroxymethylsulfinat und 0,001 T. Eisen-II-sulfat verwendet. Für die Endstufe wurden nochmals je 0,08 T. der genannten Komponenten, jedoch kein weiteres Eisen-II-sulfat zugegeben.

Mit gleich gutem Erfolg wurden Saatlatices nach den Beispielen 1 und 3 eingesetzt. Dabei wurden als Emulgatoren statt Na-Laurylsulfat die gleiche Menge eines $C_{15}$-Paraffinsulfonats oder die doppelte Menge eines fünffach oxäthylierten und phosphatierten Isononylphenols (Na-Salz) verwendet.

Beispiel 5

Beispiel 4 wurde wiederholt, jedoch statt 250

Teilen nur 125 Teile des Saatlatex nach Beispiel 2 eingesetzt.

Beispiel 6

Beispiel 4 wurde mit erhöhter Vernetzungsmittelmenge wiederholt. Der Monomerenansatz der Zwischenstufe bestand aus
91,4 Teilen Butylacrylat
16,4 Teilen Styrol
6,5 Teilen Methylmethacrylat
3,0 Teilen Trimethylolpropantriacrylat

Beispiele 7–11

Beispiel 4 wurde mit unterschiedlichen Mengen an anderen Vernetzungsmitteln in der Zwischenstufe wiederholt:

Beisp. 7: 1,5 Teile Trimethylolpropan-trimethacrylat

Beisp. 8: 2,3 Teile Trimethylolpropan-trimethacrylat

Beisp. 9: 1,5 Teile Pentaerythrit-triacrylat

Beisp. 10: 1,5 Teile Pentaerythrit-tetraacrylat

Beisp. 11: 1,5 Teile Pentaerythrit-tetramethacrylat

Als Emulgator wurde jeweils $C_{15}$-Paraffinsulfonat verwendet.

Beispiel 12

Beispiel 4 wurde mit folgender Monomerenzusammensetzung in der Zwischenstufe wiederholt:
98,2 Teile Butylacrylat
18,9 Teile Styrol
1,4 Teile Trimethylolpropantriacrylat
0,1 Teile Methacrylsäure

Beispiel 13

Beispiel 4 wurde mit folgender Monomerenzusammensetzung in der Zwischenstufe wiederholt:

71,4 Teile Butylacrylat
20 Teile 2-Äthylhexylacrylat
18,2 Teile Styrol
6,8 Teile Methylmethacrylat
1,5 Teile Trimethylolpropantrimethacrylat

C. Herstellung von Vergleichslatices

Die folgenden Vergleichsbeispiele entsprechen in der Ausführungsform dem Beispiel 4 unter Verwendung von $C_{14}$-Paraffinsulfonat als Emulgator, jedoch wurde die Zusammensetzung der Zwischenstufe wie folgt variiert:

Beispiel 14
91,4 Teile Butylacrylat
16,4 Teile Styrol
6,0 Teile Methylmethacrylat
2,3 Teile Trimethylolpropantriacrylat
1,2 Teile Allylmethacrylat

Beispiel 15
91,4 Teile Butylacrylat
16,4 Teile Styrol
4,9 Teile Methylmethacrylat
2,3 Teile Trimethylolpropantriacrylat
2,3 Teile Allylmethacrylat

Beispiel 16
91,4 Teile Butylacrylat
17,6 Teile Styrol
6,8 Teile Methylmethacrylat
1,5 Teile 1,4-Butandioldimethacrylat

Beispiel 17
91,4 Teile Butylacrylat
17,6 Teile Styrol
5,3 Teile Methylmethacrylat
3,0 Teile Triallylcyanurat

Beispiel 18
91,4 Teile Butylacrylat
17,5 Teile Styrol
5,3 Teile Methylmethacrylat
1,9 Teile Triallylcyanurat
1,2 Teile 1,4-Butandioldimethacrylat

D. Anwendungstechnische Prüfung der Emulsionspolymerisate

Mittels eines Extruders wurden die sprühgetrockneten Emulsionspolymerisate mit einer thermoplastisch verarbeitbaren Formmasse aus Polymethylmethacrylat gleichmässig vermischt. Das Mischungsverhältnis wurde so gewählt, dass der Anteil der in der Zwischenstufe enthaltenen Acrylsäurealkylester 20% der Mischung ausmachte. Aus der Mischung wurden durch Spritzguss 3 mm dicke Plättchen hergestellt, die nach dem Gardner-Test auf Weissbruch und Schlagzähigkeit geprüft wurden. Die Schlagzähigkeit wird durch die niedrigste Aufprallenergie, die zu einer Schädigung der Probe führt, bemessen. Der Weissbruch wurde visuell nach folgenden Bewertungsstufen beurteilt:

0 kein Weissbruch
1 kaum sichtbarer Weissbruch
2 schwacher Weissbruch
3 starker Weissbruch

| Verwendetes Emulsionspolymerisat nach Beispiel Nr. | Beurteilung des Weissbruches | Aufprallenergie bei Schädigung durch Schlag (in · lb) | (Joule) |
|---|---|---|---|
| 4 | 1 | >40 | >4,5 |
| 5 | 1 | >40 | >4,5 |
| 6 | 0 | >40 | >4,5 |
| 7 | 0 | >40 | >4,5 |

Tabelle (Fortsetzung)

| Verwendetes Emulsionspolymerisat nach Beispiel Nr. | Beurteilung des Weissbruches | Aufprallenergie bei Schädigung durch Schlag (in · lb) | (Joule) |
|---|---|---|---|
| 8 | 0 | 40 | 4,5 |
| 9 | 1 | >40 | >4,5 |
| 10 | 0 | >40 | >4,5 |
| 11 | 0 | 40 | 4,5 |
| 12 | 1 | >40 | >4,5 |
| 13 | 1 | >40 | >4,5 |
| Vergleichsversuche | | | |
| 14 | 1 | 20 | 2,26 |
| 15 | 0 | 12 | 1,35 |
| 16 | 3 | >40 | >4,5 |
| 17 | 2 | >40 | >4,5 |
| 18 | 1 | 16 | 1,8 |

**Patentansprüche**

1. Schlagzähmodifizierungsmittel, enthaltend ein mehrstufiges Emulsionspolymerisat, aufgebaut aus

a) einem harten, nicht-elastomeren Kern mit einer Glastemperatur über 50°C, hergestellt durch Emulsionspolymerisation eines Monomermaterials, bestehend aus wenigstens 80 Gew.% Methylmethacrylat und bis zu 20 Gew.% aus anderen, damit mischpolymerisierbaren äthylenisch ungesättigten Monomeren,

b) einer elastomeren Zwischenstufe mit einer Glastemperatur unter 0°C, hergestellt durch Emulsionspolymerisation in Gegenwart des harten Kerns a) aus einem Monomerengemisch, bestehend aus wenigstens 90 Gew% monofunktionellen äthylenisch ungesättigten Monomeren, von denen wenigstens die Hälfte ihres Gewichts Alkylester der Acrylsäure mit 1 bis 18 C-Atomen im Alkylrest oder Alkylester der Methacrylsäure mit 4 bis 18 C-Atomen im Alkylrest sind, sowie aus bis zu 10 Gew.% mehrfunktionellen Monomeren die mehrere Acryl- oder Methacrylgruppen im Molekül enthalten,

c) einer harten, nicht-elastomeren Endstufe mit einer Glastemperatur über 50°C, hergestellt durch Emulsionspolymerisation in Gegenwart des elastomeren Materials b) aus einem Monomermaterial, bestehend aus wenigstens 80 Gew.% Methylmethacrylat und bis zu 20 Gew.% aus anderen, damit mischpolymerisierbaren äthylenisch ungesättigten Monomeren, dadurch gekennzeichnet, dass am Aufbau der elastomeren Zwischenstufe als mehrfunktionelle Monomere wenigstens 0,2 Gew.%, bezogen auf die Monomeren der Stufe b), an Monomeren mit drei oder mehr Acryl- und/oder Methacrylgruppen beteiligt sind.

2. Schlagzähmodifizierungsmittel nach Anspruch 1, dadurch gekennzeichnet, dass das mehrfunktionelle Monomere am Aufbau der Zwischenstufe in einer Menge von 0,5 bis 3, vorzugsweise 0,8 bis 2,6 Gew.%, beteiligt ist.

3. Formmasse, bestehend aus 10 bis 80 Gew.% des Schlagzähmodifizierungsmittels gemäss den Ansprüchen 1 und 2 und zu 90 bis 20 Gew.% aus einer thermoplastischen Formmasse auf Basis von Methylmethacrylat.

**Claims**

1. Impact modifier, containing a multi-stage emulsion polymer built up from

a) a hard, non-elastomeric core having a glass transition point above 50°C and prepared by emulsion polymerisation of a monomer material which consists of at least 80% by weight of methyl methacrylate and up to 20% by weight of other ethylenically unsaturated monomers copolymerisable with the former,

b) an elastomeric intermediate having a glass transition point below 0°C and prepared by emulsion polymerisation in the presence of the hard core a) from a monomer mixture which consists of at least 90% by weight of monofunctional ethylenically unsaturated monomers, of which at least half of their weight represents alkyl esters of acrylic acid with 1 to 18 carbon atoms in the alkyl radical or alkyl esters of methacrylic acid with 4 to 18 carbon atoms in the alkyl radical, and from up to 10% by weight of polyfunctional monomers containing several acrylic or methacrylic groups in the molecule

c) a hard, non-elastomeric end stage having a glass transition point above 50°C and prepared by emulsion polymerisation in the presence of the elastomeric material b) from a monomer material which consists of at le at 80% by weight of methyl methacrylate and up to 20% by weight of other ethylenically unsaturated monomers copolymerisable therewith,

characterised in that at least 0.2% by weight, relative to the monomers of stage b), of monomers having three or more acrylic and/or methacrylic groups participate as polyfunctional monomers in building up the elastomeric intermediate stage.

2. Impact modifier according to claim 1, characterised in that the polyfunctional monomer participates in a quantity of 0.5 to 3% by weight, preferably 0.8 to 2.6% by weight, in building up the intermediate stage.

3. Moulding composition, consisting of 10 to 80% by weight of the impact modifier according to claims 1 and 2 and of 90 to 20% by weight of a thermoplastic moulding composition based on methyl methacrylate.

**Revendications**

1. Agent de modification améliorant la résistance aux chocs, contenant un produit de polymérisation en émulsion à plusieurs phases, constitué par:

a) un noyau dur, non élastomère ayant une température de transition vitreuse de plus de 50°C, préparé par polymérisation en émulsion d'une matière monomère composée d'au moins 80% en poids de méthacrylate de méthyle et de 20% en poids au maximum d'autres monomères insaturés éthyléniquement, copolymérisables avec celui-ci,

b) une phase intermédiaire élastomère ayant une température de transition vitreuse de moins de 0°C, préparée par polymérisation en émulsion, en présence du noyau dur a), à partir d'un mélange de monomères composé d'au moins 90% en poids de monomères monofonctionnels insaturés éthyléniquement qui sont, pour la moitié au moins de leur poids, des esters alkyliques de l'acide acrylique à 1-18 atomes de C dans le radical alkyle ou des esters alkyliques de l'acide méthacrylique à 4-18 atomes de C dans le radical alkyle, ainsi que de 10% en poids au maximum de monomères multifonctionnels qui contiennent plusieurs groupes acryliques ou méthacryliques dans la molécule.

c) une phase finale dure, non élastomère ayant une température de transition vitreuse de plus de 50°C, préparée par polymérisation en émulsion, en présence de la matière élastomère b), à partir d'une matière monomère composée d'au moins 80% en poids de méthacrylate de méthyle et de 20% en poids au maximum d'autres monomères insaturés éthyléniquement, copolymérisables avec celui-ci, caractérisé en ce que participe à la constitution de la phase intermédiaire élastomère, en tant que monomères multifonctionnels, au moins 0,2% en poids, sur la base des monomères de la phase b), de monomères comportant trois groupes acryliques et/ou méthacryliques ou plus.

2. Agent de modification améliorant la résistance aux chocs selon la revendication 1, caractérisé en ce que le monomère multifonctionnel participe à la constitution de la phase intermédiaire dans une proportion de 0,5 à 3, de préférence de 0,8 à 2,6% en poids.

3. Matière à mouler, se composant de 10 à 80% en poids de l'agent de modification améliorant la résistance aux chocs selon la revendication 1 ou 2 et de 90 à 20% en poids d'une matière à mouler thermoplastique à base de méthacrylate de méthyle.